# EUROPÄISCHE PATENTSCHRIFT

(11) **EP 2 013 505 B1**
(45) Veröffentlichungstag und Bekanntmachung des Hinweises auf die Patenterteilung: **26.08.2009**
(21) Anmeldenummer: 07722274.3
(22) Anmeldetag: 23.04.2007
(51) Int. Cl.: F16D 53/00

(54) **BREMS- UND/ODER KLEMMVORRICHTUNG FÜR WELLEN MIT EINEM KLEMMRING**
BRAKING AND/OR CLAMPING DEVICE FOR SHAFTS COMPRISING A CLAMPING RING
DISPOSITIF DE FREINAGE ET/OU DE SERRAGE POUR ARBRES MUNI D'UNE BAGUE DE SERRAGE

(30) Priorität: 24.04.2006 DE 102006019350
(43) Veröffentlichungstag der Anmeldung: 14.01.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2007/000716
(87) Internationale Veröffentlichungsnummer: WO 2007/121730

(56) Entgegenhaltungen:
- DE-A1- 10 060 684
- US-A- 2 966 237

## Beschreibung

Die Erfindung betrifft eine Brems- und/oder Klemmvorrichtung einer in einem Gerätegehäuse oder dem Vorrichtungsgehäuse gelagerten Welle, mit einer auf oder an der Welle drehstarr befestigten Bremsscheibe, wobei die Bremsscheibe einen mindestens eine kegelstumpfmantelförmige Reibfläche umfassenden Reibbereich aufweist und mit mindestens einem im Vorrichtungsgehäuse angeordneten Bremskonus, an dem die Reibfläche beim Bremsen oder Klemmen zur Anlage kommt.

Eine derartige Vorrichtung ist als Kegelbremse in der DE 602 397 C offenbart. Allerdings hat diese Vorrichtung eine Bremsscheibe, deren Zwischenbereich formsteif ausgeführt ist. Aus der US 2,771,977 ist eine Kegelkupplung bekannt. Diese hat nur eine Reibflächenpaarung.

Des weiteren ist aus der US 2,966,237 eine Kegelbremse mit zwei Reibflächenpaarungen bekannt.

Der vorliegenden Erfindung liegt die Problemstellung zugrunde, eine Brems- und/oder Klemmvorrichtung für rotierende Wellen zu entwickeln, die bei großen Klemmkräften und kurzen Reaktionszeiten einen einfachen und bauraumsparenden Aufbau hat und zudem dauerhaft stör- und wartungsfrei ist. Auch sollen die rotierenden Teile der Vorrichtung das Beschleunigungsverhalten der zu bremsenden oder zu klemmenden Welle im ungebremsten Normalbetrieb so wenig wie möglich beeinflussen.

Diese Problemstellung wird mit den Merkmalen des Hauptanspruches gelöst. Dazu ist der Bremskonus - zur bremsenden oder klemmenden Belastung und zur lüftenden Entlastung der Bremsscheibe - entweder durch zwei Stellglieder - jeweils eines pro be- und entlastender Betätigungsrichtung - oder durch ein Stellglied für eine Betätigungsrichtung und ein Federsystem mit mindestens einem Federelement für die andere Betätigungsrichtung axial bewegbar. Im Vorrichtungsgehäuse ist ein Klemmring drehstarr angeordnet. Der Klemmring weist einen Anflanschbereich, einen Zwischenbereich und einen Klemmbereich auf. Der Klemmbereich ist gegenüber dem Anflanschbereich über den zwischen diesen Bereichen gelegenen, zumindest bereichsweise elastischen, Zwischenbereich in Axialrichtung verschiebbar. Der Klemmbereich hat eine äußere und eine innere kegelstumpfmantelförmige Klemmfläche. Die äußere Klemmfläche ist gegenüber der Reibfläche der Bremsscheibe angeordnet, während die innere Klemmfläche vor der Reibfläche des Bremskonus liegt.

Bei dieser Brems- und/oder Klemmvorrichtung wird z.B. eine in einem Maschinengehäuse gelagerte Welle abgebremst oder festgeklemmt. Das Gehäuse der Vorrichtung ist hierbei direkt starr am Maschinengehäuse befestigt, so dass der Bremskraftfluss den kürzest möglichen Weg zwischen dem Vorrichtungsgehäuse und dem Maschinengehäuse bzw. Gerätegehäuse hat. Letzteres kann auch nur ein Gestell sein. Ggf. ist das Vorrichtungsgehäuse auch Teil des Maschinengehäuses.

Die Vorrichtung wird beispielsweise im Werkzeugmaschinenbau u.a. in Rundtischen und Getriebespindeln zum direkten Bremsen und/oder Klemmen verwendet. Im Handhabungsgerätebau wird sie auch als Feststeller in Robotergelenken integriert. Ferner kann sie auch indirekt als Schlittenbremse oder -klemmung eingesetzt werden, sofern der Schlitten einen Gewindespindelantrieb oder dergleichen aufweist.

Die Brems- und/oder Klemmvorrichtung wird meist über ein Federsystem betätigt und über einen pneumatischen Antrieb als Stellglied gelöst. Sie kann auf diese Weise z.B. auch als Notbremssystem verschaltet und benutzt werden. Zwischen der zu bremsenden oder zu klemmenden Welle und dem Vorrichtungsgehäuse ist die verwendete Bremsscheibe direkt integriert. Da die Bremsscheibe drehstarr - ohne Spiel - auf der Welle sitzt, kann über das in der Vorrichtung eingebaute Reibgehemme die Welle präzise und ohne Umkehrspiel gehalten werden. Der beim Bremsen oder Klemmen mit der Bremsscheibe durch Kraft- und Reibschluss in Kontakt kommende Klemmring leitet den von der klemmenden Welle ausgehenden Kraftfluss auf kürzestem Weg in das Vorrichtungsgehäuse ab. Dies garantiert eine besonders steife, spielfreie Klemmung und eine große Haltekraft.

Als Stellglied können u.a. auch hydraulische Zylinder-Kolbeneinheiten, Piezostellglieder oder Formgedächtniselemente verwendet werden. Alle Stellglieder können sowohl für die Be- als auch für die Entlastungsrichtung verwendet werden. Dabei können gleich- oder verschiedenartige Stellglieder pro Belastungsrichtung - hintereinander oder nebeneinander im oder am Gehäuse angeordnet werden. Ferner können die pneumatischen Stellglieder auch mit inertem Gas betrieben werden.

Weitere Einzelheiten der Erfindung ergeben sich aus den Unteransprüchen und der nachfolgenden Beschreibung schematisch dargestellter Ausführungsformen.
- Figur 1:: Dimetrische Darstellung einer Brems- und/oder Klemmvorrichtung ca. in Originalgröße;
- Figur 2:: Längsschnitt zu Figur 1, vergrößert;
- Figur 3:: weiterer Längsschnitt zu Figur 1, ca. Original- größe;
- Figur 4:: Längsschnitt zu Figur 1, jedoch im Klemmzustand;
- Figur 5:: Bremsscheibe mit mehrfach geschlitztem Reib- und Zwischenbereich;
- Figur 6:: wie Figur 5, jedoch in der Rückansicht;
- Figur 7:: Bremsscheibe mit radialen Speichen;
- Figur 8:: Bremsscheibe mit tangentialen Speichen;
- Figur 9:: Ausschnitt des Reibbereichs zu Figur 2;
- Figur 10:: Klemmvorrichtung mit Klemmscheibe im Teillängs- schnitt, unbetätigt;
- Figur 11:: Ausschnitt des Klemmbereichs zu Figur 10;
- Figur 12:: wie Figur 10, jedoch im Klemmzustand;
- Figur 13:: Klemmscheibe mit mehrfach geschlitztem Reib- und Zwischenbereich;
- Figur 14:: wie Figur 13, jedoch in der Rückansicht.

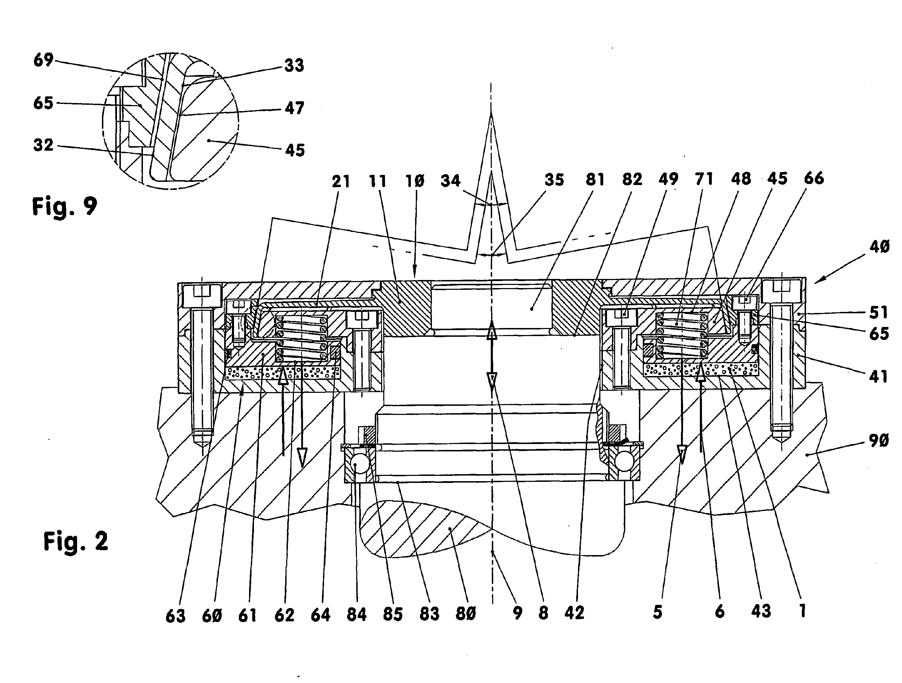

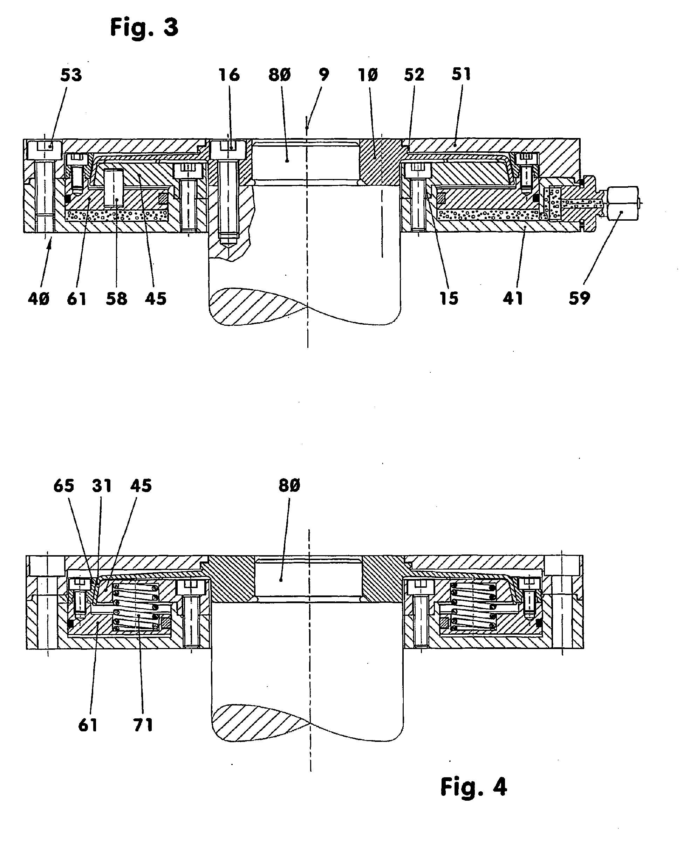

Figur 2 zeigt eine in einem Gerätegehäuse (90) wälzgelagerte Welle (80). Auf dem Wellenende ist stirnseitig eine Bremsscheibe (10) angeflanscht. Die mit einem Reibbereich (31) ausgestattete Bremsscheibe (10) ist von einem am Gerätegehäuse (90) befestigten Vorrichtungsgehäuse (40) umgeben. Im Vorrichtungsgehäuse (40) befindet sich u.a. ein axial beweglicher Bremskonus (65), der über Federelemente (71) den Reibring (31) der Bremsscheibe (10) - zum z.B. trockenen Bremsen und/oder Klemmen - gegen einen ortsfesten und nicht drehbaren Bremskonus (45) drückt, vgl. auch Figur 4. Die Klemmwirkung kann zur Freigabe der Bremsscheibe (10) beispielsweise mit Hilfe eines pneumatischen Stellgliedes (60) aufgehoben werden.

In dem Ausführungsbeispiel nach Figur 2 ist die Welle (80) nahezu spielfrei in dem Gerätegehäuse (90) gelagert. Die dargestellte Lagerung zeigt ein Festlager, bei dem das Wälzlager (84) mittels einer, über einen Sicherungsring gesicherten, Wellenmutter (85) gegen einen Bund (83) der Welle (80) fixiert ist. Im Gerätegehäuse (90) sitzt der Außenring des Wälzlagers (84) in einer Stufenbohrung (91) zwischen einem Gehäusebund (92) und der Wellenmutter (85). Somit hat die Welle (80) im Gerätegehäuse (90) nur ein geringes Axialspiel.

Das Gerätegehäuse (90) hat eine zur Wellenmittellinie (9) normale Flanschfläche (94), an der das Vorrichtungsgehäuse (40) z.B. zentriert positioniert und über die Schrauben (95) befestigt ist.

Das Vorrichtungsgehäuse (40) besteht aus einem Grundkörper (41) und einem Gehäusedeckel (51). Beide Teile haben jeweils eine zentrale Durchgangsbohrung (42, 52) zum Durchführen der Welle (80). Der Grundkörper (41) weist einen ringförmigen, konzentrisch zur Bohrung angeordneten Kanal (43) auf. Dieser Ringkanal (43) ist der Zylinder des pneumatischen Stellgliedes (60). Im Ringkanal (43) ist ein Ringkolben (61) eingesetzt. Der Ringkolben (61) ist gegenüber den Kanalwandungen des Ringkanals (43) mit mindestens zwei Dichtringen (63, 64) abgedichtet. Der innere, im Durchmesser kleinere Dichtring (64) hat hierbei einen ca. zwei- bis dreifach größeren Querschnitt als der äußere, größere Dichtring (63). Die radiale Außenfläche des Ringkolbens (61) ist - um ein Verkanten zu vermeiden - sphärisch oder ballig gekrümmt ausgeführt. Der Krümmungsradius entspricht ca. 80% des Ringkolbenaußendurchmessers. Der Krümmungsmittelpunkt liegt z.B. im Bereich der halben Höhe des Ringkolbens (61) oder in der Höhe der Mittelebene des inneren Dichtrings (64).

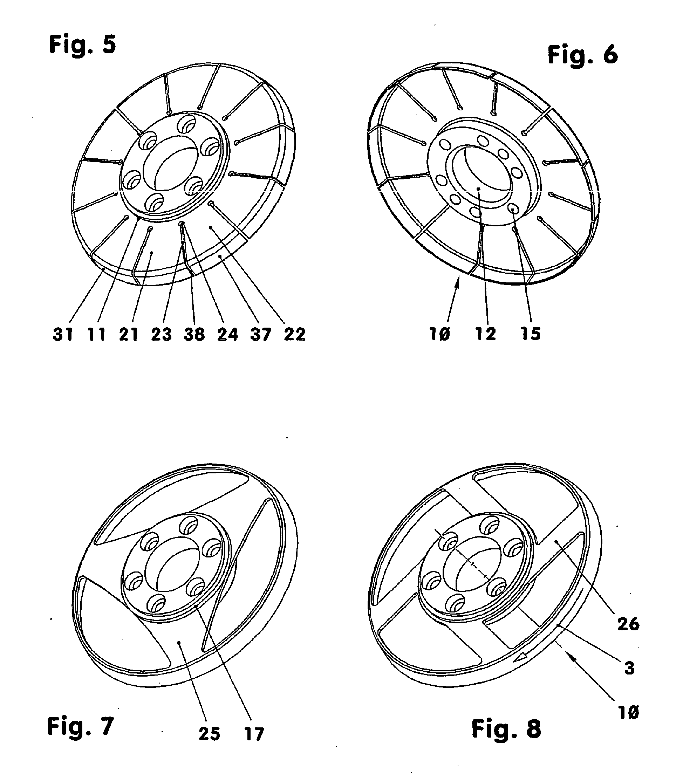

Auf der druckluftabgewandten Seite des Ringkolbens (61) ist ein ringförmiger Bremskonus (65) angeformt oder zentriert befestigt, vgl. Figur 5. Dieser Innenkonus (65) hat eine kegelstumpfmantelförmige Reibfläche (69). Die theoretische Spitze des Kegelstumpfes liegt in Richtung der bremslösenden Betätigungsrichtung (6) außerhalb des Vorrichtungsgehäuses (40) auf der Mittellinie (9).

Der Bremskonus (65) kann ggf. auch aus einzelnen Segmenten bestehen. Zwischen den einzelnen Segmenten können Zwischenräume liegen, die länger sind als die Segmente selbst.

Des Weiteren hat der Ringkolben (61) auf der druckluftabgewandten Seite mehrere Sacklochbohrungen (62) zur Aufnahme von Schraubendruckfedern (71). Ggf. können anstelle der Schraubendruckfedern auch Tellerfederpakete oder Kegelfedern verwendet werden. Die Sacklochbohrungen (62), es können z.B. 3 bis 12 Bohrungen sein, liegen alle - äquidistant verteilt - auf einem Kreis um die Mittellinie (9).

Auf dem zwischen dem Ringkanal (43) und der Welle (80) liegenden Gehäusebereich ist ein weiterer Bremskonus (45) über die Schrauben (49) befestigt. Dieser Außenkonus (45) hat die Form einer zentral gelochten Scheibe. Seine radial außen liegende Wandung bzw. Reibfläche (47) entspricht dem Mantel eines Kegelstumpfes. Auch die theoretische Spitze dieses Kegelstumpfes liegt in Richtung der bremslösenden Betätigungsrichtung (6) außerhalb des Vorrichtungsgehäuses (40) auf der Mittellinie (9) der Welle (80). Die Kegelwinkel (34, 35) der Reibflächen (47, 69) sind nach den Ausführungsbeispielen identisch.

Die Reibflächen (47, 69) der nicht rotierenden Bremskonen (45, 65) können ggf. mit speziellen Bremsbelägen oder mit vergleichbaren Beschichtungen ausgestattet sein. Auch nur eine Reibfläche kann mit einem Belag versehen werden.

Dem Ringkolben (61) zugewandt hat der Bremskonus (45) mehrere Sacklochbohrungen (48). Diese Bohrungen liegen gegenüber den Sacklochbohrungen (62) des Ringkolbens (61).

In Figur 3 sind in der linken Figurenblatthälfte weitere Sacklochbohrungen im Ringkolben (61) und dem Bremskonus (45) zu erkennen. Sie lagern einen Bolzen (58), der als Verdrehsicherung des Ringkolbens (61) gegenüber dem Vorrichtungsgehäuse (40) dient. Dazu ist der Bolzen (58) im ortsfesten Bremskonus (45) fest eingepresst, während er mit Spiel in die Bohrung des Ringkolbens (61) hineinragt.

Auf dem Grundkörper (41) sitzt zentriert der z.B. scheibenförmige Gehäusedeckel (51). Letzterer ist am Grundkörper (41) mittels der Deckelschrauben (53) fixiert, vgl. Figur 3. Die mehrfach gestufte Durchgangsbohrung (52) hat gegenüber den rotierenden Teilen (10, 80) der Vorrichtung die Funktion einer reibungsfreien Labyrinthdichtung.

Das dargestellte Ende der Welle (80), vgl. Figur 2, hat einen Wellenbund (82), auf dem die Bremsscheibe (10) gelagert und befestigt ist. Die Bremsscheibe (10) hat dazu einen ringförmigen Anflanschbereich (11), vgl. Figuren 5 und 6, mit mehreren Befestigungsbohrungen (15). Über die zentrale Bohrung (12) dieses Bereichs sitzt die Bremsscheibe (10) zentriert auf dem Wellenzapfen (81). Über die in den Bohrungen (15) sitzenden Schrauben (16), vgl. Figur 3, ist sie axial fixiert. Die Mittellinien der Bohrungen (15) liegen parallel zur Mittellinie (9).

An den Anflanschbereich (11) schließt sich der beispielsweise scheibenförmige, einen Reibbereich (31) tragende, zwischenbereich (21) an, vgl. Figur 5. In der Übergangszone zwischen diesen Bereichen (11, 21) hat der Anflanschbereich (11) eine gestufte Außenkontur (17), vgl. Figur 5. Letztere entspricht weitgehend der Innenkontur der mehrfach gestuften Bohrung (52) des Gehäusedeckels (51). Die radial gemessene Spaltbreite dieser Dichtfuge beträgt z.B. ca. 0,2 Millimeter. Im Idealfall trifft dies auch auf die axiale Spaltbreite zu.

Der Reibbereich (31) hat nach den Figuren 5 und 6 die Hüllkontur eines Ringes, dessen radiale Außen- und Innenwandung kegelstumpfmantelförmig gestaltet ist. Diese Wandungen sind die Reibflächen (32, 33). Ihre Kegelwinkel (34, 35), vgl. Figur 2 sind nur beispielhaft gleich groß. Die Kegelwinkel (34, 35) messen in den Ausführungsbeispielen 20 Winkelgrade. Die Wandstärke des Reibbereiches (31) beträgt im Konstruktionszustand z.B. einen Millimeter. Der Reibbereich (31) kann ggf. eine Beschichtung mit hohem Reibwert aufweisen. Bei beiden Reibpaarungen Reibbereich(31)/äußerer Bremskonus (65) und Reibbereich (31)/innerer Bremskonus (45) können vergleichbare oder unterschiedliche Material- und Reibwertkombinationen benutzt werden.

Alternativ können bei Vorrichtungen, sofern sie nur bei stehender Welle zum Klemmen verwendet werden, die einander kontaktierenden Reibflächen mindestens einer Reibflächenpaarung mit einer verzahnungsartigen Rillung, z.B. vergleichbar mit einer Hirthverzahnung, versehen werden. Bei kleiner Rillungsteilung sind hierbei benachbarte Klemmpositiönierungen möglich, die die Welle in Winkelbereichen unter einem Winkelgrad weiterpositionieren lassen.

Für den zwischen dem Reibbereich (31) und dem Anf lanschbereich (11) gelegenen Zwischenbereich (21) gibt es unzählige Konstruktionsvarianten, von denen hier nur wenige vorgestellt werden. Der Zwischenbereich (21) hat die Aufgabe, den axialen Versatz des Reibbereichs (31) gegenüber der Wellenposition bzw. gegenüber dem Anflanschbereich (11) auszugleichen, vgl. Figur 4. In dieser Figur ist die Vorrichtung mit geklemmter Welle (80) dargestellt. Der außen liegende Bremskonus (65) zieht über den federbelasteten Ringkolben (61) den Reibbereich (31) gegen den inneren Bremskonus (45). Die Konen (45, 65) klemmen als Keilgetriebe den Reibbereich (31) ein. Der axiale Versatz beträgt bei den dargestellten Varianten ca. 0,75 Millimeter. Bei einem fortgeschrittenen Verschleiß der Reibflächen kann er auf einen Millimeter anwachsen. Je nach Materialwahl und Zwischenbereichsform sind bei Bremsscheiben dieser Größenordnung axiale, elastische Versätze von bis zu 3 Millimetern denkbar.

Der mittlere Wirkdurchmesser des Reibbereichs (31) ändert sich bei seiner axialen Reibbereichsverlagerung nur unwesentlich. Dieser Einfluss lässt sich durch ein Verwenden von tangential angeordneten Speichen (26) noch minimieren, vgl. Figur 6. Die minimale radiale Längenverkürzung des Abstandes zwischen den Bereichen (11, 31) wird - zumindest im Stillstand - durch ein "Aufdrehen" der Tangentialspeichen (26) ausgeglichen. Eine Bremsscheibe (10) mit Tangentialspeichen (26) klemmt die Welle in der Verdrehrichtung (3) mit höherer Steifigkeit als bei einer Drehung in Gegenrichtung.

Die in Figur 5 abgebildete Bremsscheibe (10) hat radiale Speichen (25). Deren Steifigkeit ist drehrichtungsunabhängig. Die Speichen (25) sind zum Nabenbereich hin z.B. um den Faktor 3 verbreitert. Die symmetrische Verbreiterung ermöglicht eine sehr hohe Verdrehsteifigkeit.

Die Figuren 5 und 6 zeigen eine Bremsscheibe (10), wie sie in den Vorrichtungen nach den Figuren 2-4 eingebaut ist. Der Zwischenbereich (21) und der Reibbereich (31) sind durch radiale Schlitze (23, 38) in z.B. 12 kreisringstückförmige Segmente (22, 37) aufgeteilt. Die Schlitze (23, 38) enden im Übergangsbereich zum Anflanschbereich (11) in kleinen Bohrungen (24) zur Minderung auftretender Kerbspannungen. Die geschlitzte Bremsscheibe (10) wird für einen Wellendrehzahlbereich unter 1000 Umdrehungen/Minute verwendet. Das durch Klemmen spielfrei zu haltende Drehmoment liegt im Bereich von 150 ... 200 Nm.

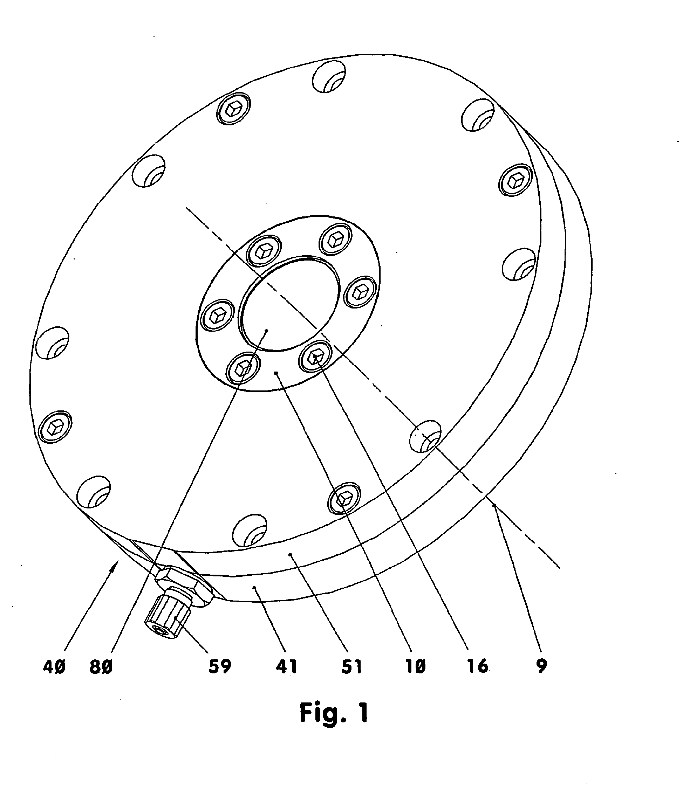

Die unverschlissene Bremsscheibe (10) hat bei nicht betätigter Klemmung im Vorrichtungsgehäuse (40) gegenüber dem außen liegenden Bremskonus (65) - nach Figur 1 - einen Lüftspalt von z.B. 0,3 mm Breite. Der Lüftspalt zwischen dem Reibbereich (31) und dem innen liegenden Bremskonus (45) beträgt ca. 1,5 mm.

Im Vorrichtungsquerschnitt nach Figur 3 ist als zusätzliche Information der Pneumatikanschluss (59) der Zylinderkolbeneinheit zu erkennen. Danach ist der Ringkolben (61) Teil eines einfach wirkenden Zylinders. Mit einer Druckluftbeaufschlagung wird hier die Bremse bzw. Klemmung entgegen der Wirkung der Federelemente in der gelösten Position gehalten. Bei einem Abschalten oder Unterbrechen der Druckluftzufuhr drücken die Federelemente (71) den Ringkolben (61) nach unten, vgl. Figur 4. Hierbei zieht der Ringkolben (61) den Bremskonus (65) gegen den Reibabschnitt (31). Letzterer wird dadurch zum entgültigen Klemmen gegen den Bremskonus (45) gedrückt.

In seiner unteren Position liegt der Ringkolben (61) z.B. über drei - nicht dargestellte - an seiner druckluftbeaufschlagbaren Stirnseite angeordnete, Nocken am Boden des Ringkanals (43) auf.

Bei schnelldrehenden Wellen (80) können im Vorrichtungsgehäuse (40) störende Strömungsgeräusche entstehen. Um diese Störgeräusche zu dämpfen und/oder zu dämmen, wird beispielsweise in den Gehäusedeckel (51) ein - hier nicht dargestellter - Absorbereinsatz eingeklebt. Er ist beispielsweise aus einem offenzelligen porösen Material hergestellt.

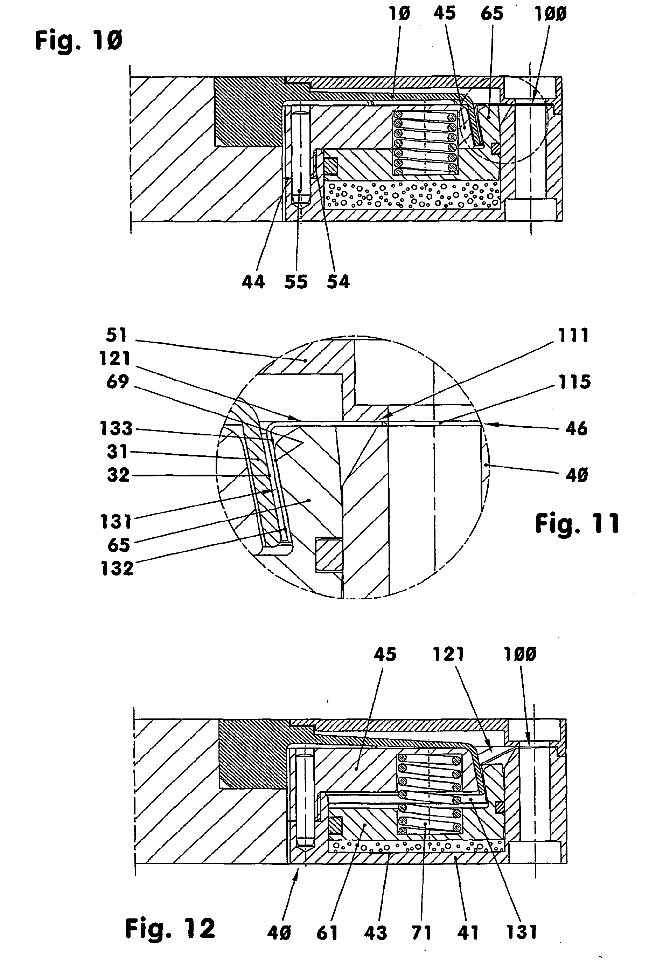

In den Figuren 10 bis 12 ist eine Brems- und/oder Klemmvorrichtung dargestellt, die bei gleichem Bauraum eine größere Ringkolbenfläche hat. Dies wird durch eine veränderte Verbindung zwischen dem Grundkörper (41) und dem Bremskonus (45) möglich. Beide Teile (41) und (45) werden nicht mehr über Schrauben (49), vgl. Figur 2, sondern über ein in der entsprechenden Montagefuge (44) angeordnetes Gewinde (54) miteinander direkt verschraubt. Die u.a. in Figur 2 verwendeten Schrauben (49) werden durch mehrere - jedoch mindestens zwei - Zylinderstifte (55) ersetzt. Die Bohrungen für die Zylinderstifte (55) werden erst nach dem Verschrauben beider Bauteile (41, 45) hergestellt. Die Zylinderstifte (55) dienen u.a. als Aufdrehsicherung.

Ferner werden der Ringkolben (61) und der von ihm getragene Bremskonus (65) aus einem Stück hergestellt. Durch den Wegfall der bisher verwendeten Schrauben (66), vgl. Figur 2, kann der wirksame Durchmesser der Bremsscheibe (10) vergrößert werden.

Des Weiteren liegt der Bremskonus (65), vgl. auch Figur 11, nicht mehr direkt an der äußeren Reibfläche (32) des Reibbereichs (31) der Bremsscheibe (10) an. Zwischen dem Reibbereich (31) und dem Bremskonus (65) liegt der Klemmbereich (131) eines Klemmringes (100).

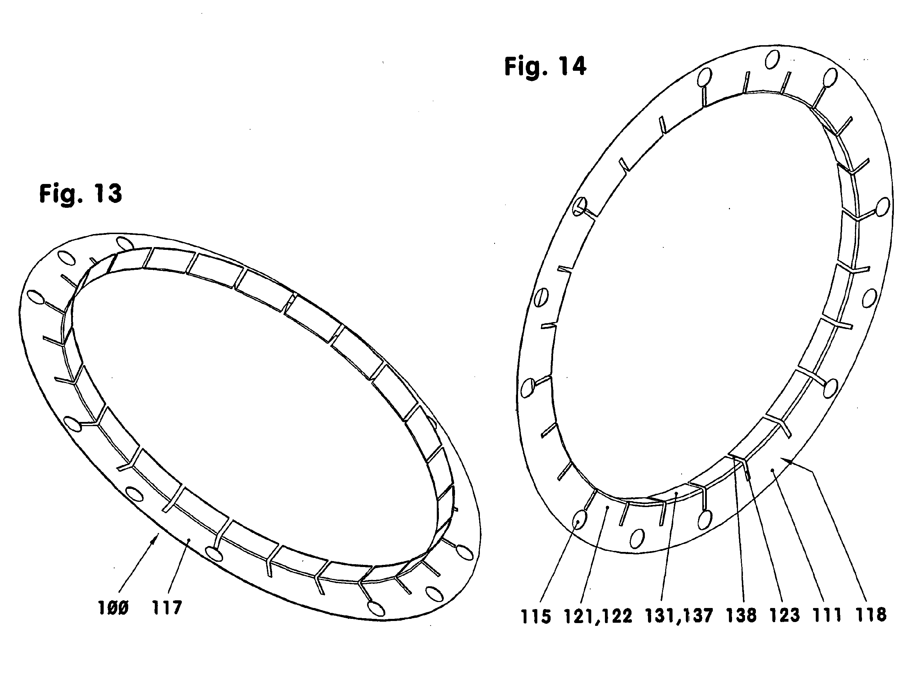

Der Klemmring (100), vgl. Figuren 13 und 14, ist ein dünnwandiger Ring mit einem winkelförmigen Teilquerschnitt. Die nach den Figuren 13 und 14 in einer Ebene liegenden Ringzonen sind der Anflanschbereich (111) und der nach innen sich anschließende Zwischenbereich. Im Anflanschbereich (111) befinden sich die Bohrungen (115). An den Zwischenbereich (121) schließt sich abgewinkelt der Klemmbereich (131) an.

Der Zwischen- und der Klemmbereich (121, 131) besteht aus einer Vielzahl von Speichen (122, 137). Es sind beispielsweise 24 Stück. Die Speichen (122, 137) sind durch radial orientierte Schlitze (123, 138) voneinander getrennt. Die Schlitze (123) können im Anflanschbereich (111) in kerbspannungsmindernden Bohrungen enden, wie sie für die Bremsscheibe (10) in Figur 5 gezeigt sind.

Die Speichen (122) können als Radialspeichen auch eine trapezförmige Gestalt haben, wie sie für die Bremsscheibe (10) in Figur 7 dargestellt sind. Auch die in Figur 8 gezeigten Tangentialspeichen (26) sind für den Klemmring (100) denkbar. Anstelle der Speichen (122) kann der Zwischenbereich auch vollflächig als Metallmembrane geformt sein. Die Metallmembrane hat im Querschnitt eine Wellenkontur. Letztere ermöglicht einen großen axialen Versatz bei höchster Torsionssteifigkeit. Der Klemmbereich (131) hat nach den Figuren 13 und 14 die Hüllkontur eines Ringes, dessen radiale Außen- und Innenwandung kegelstumpfmantelförmig gestaltet ist. Diese Wandungen sind die Klemmflächen (132, 133). Ihre Kegelwinkel (34, 35), vgl. Figur 2, sind nur beispielhaft gleich groß. Die Kegelwinkel (34, 35) messen in den Ausführungsbeispielen 20 Winkelgrade. Der Klemmbereich (131) kann ggf. eine Beschichtung mit hohem Reibwert aufweisen. Bei der Reibpaarung Reibbereich (31)/Klemmring (100) können vergleichbare oder unterschiedliche Material- und Reibwertkombinationen benutzt werden.

Im Klemmbereich (131) kann anstelle der Segmente (137) ein durchgehender Ring verwendet werden, vgl. hierzu den geschlossenen Ring der Bremsscheibe (10) nach Figur 8.

Solange innerhalb der Brems- und/oder Klemmvorrichtung bei der Bremsscheibe und beim Klemmring einem Bauteil mit einem geschlossenen Ring ein Bauteil mit Segmenten (37) oder (137) gegenüber steht, kann die Vorrichtung auch Bremsen. Kontaktieren sich beim Betätigen der Vorrichtung jedoch sich gegenüberliegende Segmente (37, 137), darf die Klemmung nur bei ruhender Welle (80) geschlossen werden. Hier hat man dann lediglich eine reine Feststellfunktion.

Wird nur die Feststellfunktion verlangt, können auf den Segmenten oder den geschlossenen Ringen zusätzlich verzahnungsartige Rillungen angeordnet werden, die sich bei einer Betätigung der Vorrichtung ineinander sicher verhaken.

Die Wandstärke des Klemmringes (100), die beispielsweise über alle Bereiche (11, 121, 131) konstant ist, beträgt im Konstruktionszustand z.B. 0,2 bis 0,3 Millimeter. Als Werkstoff wird z.B. der Stahl 46 Si 7 benutzt.

Ggf. ist der Klemmring (100) z.B. im Bereich der Reibfläche (69) des Bremskonus (65) form- oder kraftschlüssig an letzterem befestigt, z.B. durch Punktschweißen.

Zum Betätigen der Brems- und/oder Klemmvorrichtung nach den Figuren 10 bis 12 wird nach dem Entlüften des Ringkanals (43) der Ringkolben (61) unter der Wirkung der Federelemente (71) nach unten geschoben. Hierbei zieht der Ringkolben (61) über seine Reibfläche (69) den Klemmbereich (131) des Klemmringes (100) mit. Nach Figur 12 legt sich die Klemmfläche (132) des Klemmbereichs (131) an der Reibfläche (32) des Reibbereichs (31) an. Der Zwischenbereich (121) des Klemmringes (100) wird dabei unter elastischer Verformung nach unten gezogen. Im geklemmten Zustand haftet - unter der Wirkung der Klemmkraft - die Reibfläche (32) an der Klemmfläche (132). Das auf die Welle wirkende Torsionsmoment wird somit auf dem kürzesten Weg über den Zwischenbereich (121) des Klemmringes (100) und die Montagefuge (46) in das Vorrichtungsgehäuse (40) eingeleitet. Auf die Verbindung zwischen dem Bremskonus (45) und dem Grundkörper (41) wirkt hier folglich kein Torsionsmoment.

Nach einem Entlasten der Brems- und/oder Klemmvorrichtung durch ein z.B. pneumatisches Betätigen des Ringkolbens (61) werden die Bremsscheibe (10) und der Klemmring (100) wieder freigegeben. Sie lösen sich voneinander und von den Bremskonen (45) und (65). Der Klemmring (100) liegt hierbei trotzdem - zumindest bereichsweise - am Bremskonus (65) an. Die Bremsscheibe (10) und der Klemmring (100) federn jeweils elastisch - ohne plastische Verformungen - in ihre in Figur 10 dargestellten Ausgangspositionen zurück.

Alle gezeigten Bremsscheiben und/oder Klemmringe haben elastisch verformbare, aus einem Stück gefertigte Zwischenbereiche. Alternativ können die Zwischenbereiche kraft-, form- oder stoffschlüssig in die Bremsscheibe und/oder den Klemmring integriert werden, z.B. wenn der Werkstoff des Zwischenbereichs sich vom Werkstoff des Reib- bzw. Klemmbereichs oder des Anflanschbereichs unterscheiden soll. Ggf. kann der Zwischenbereich auch zusätzlich Federelemente aufweisen, die u.a. das Zurückfedern des Reibbereichs nach dem Klemmen unterstützen.

### Bezugszeichenliste:

- 1: Luft, Gas
- 3: Wellendrehrichtung
- 5: Betätigungsrichtung, bremsend, belastend
- 6: Betätigungsrichtung, bremslösend, entlastend
- 8: Axialrichtung
- 9: Mittellinie der Vorrichtung und der Welle (80)

- 10: Bremsscheibe
- 11: Anflanschbereich
- 12: Bohrung, zentral
- 15: Befestigungsbohrungen
- 16: Schrauben
- 17: Außenkontur, gestuft

- 21: Zwischenbereich, elastisch
- 22: Segmente, Kreisringstückform, Speichen
- 23: Schlitze
- 24: Bohrungen an Schlitzenden

- 25: Speichen, radial,
- 26: Speichen, tangential

- 31: Reibbereich
- 32: Reibfläche, außen, kegelstumpfmantelförmig
- 33: Reibfläche, innen, kegelstumpfmantelförmig
- 34: Kegelwinkel, außen
- 35: Kegelwinkel, innen
- 37: Segmente
- 38: Schlitze

- 40: Vorrichtungsgehäuse
- 41: Grundkörper
- 42: Durchgangsbohrung
- 43: Ringkanal, Zylinder
- 44: Montagefuge zwischen (41) und (45)
- 45: Bremskonus, Außenkonus; innen
- 46: Montagefuge zwischen (41) und (51)
- 47: Reibfläche
- 48: Sacklochbohrungen für (71)
- 49: Schrauben für Bremskonus (45)

- 51: Gehäusedeckel
- 52: Stufenbohrung, Durchgangsbohrung
- 53: Deckelschrauben
- 54: Gewinde
- 55: Zylinderstift
- 58: Bolzen (Verdrehsicherung)
- 59: Pneumatikanschluss

- 60: Stellglied, Zylinderkolbeneinheit
- 61: Kolben, Ringkolben
- 62: Sacklochbohrungen für Federn
- 63: Dichtungsring, groß
- 64: Dichtungsring, klein
- 65: Bremskonus, Innenkonus; außen
- 66: Schrauben
- 69: Reibfläche

- 71: Schraubendruckfedern, Federelement

- 80: Welle
- 81: Wellenzapfen

- 82: Wellenbund für Bremsflansch
- 83: Wellenbund für Wälzlager
- 84: Wälzlager
- 85: Wellenmutter

- 90: Gerätegehäuse
- 91: Stufenbohrung
- 92: Gehäusebund
- 93: Sicherungsring
- 94: Flanschfläche
- 95: Befestigungsschrauben
- 96: Wellendichtring

- 100: Klemmring
- 111: Anflanschbereich
- 115: Befestigungsbohrungen
- 117: Oberseite von (100)
- 118: Unterseite von (100)

- 121: Zwischenbereich
- 122: Speichen, Segmente im Zwischenbereich
- 123: Schlitze
- 131: Klemmbereich
- 132: Klemmfläche, außen, kegelstumpfmantelförmig
- 133: Klemmfläche, innen, kegelstumpfmantelförmig
- 137: Segmente im Klemmbereich
- 138: Schlitze

## Patentansprüche

1. Brems- und/oder Klemmvorrichtung einer in einem Gerätegehäuse (90) oder dem Vorrichtungsgehäuse (40) gelagerten Welle (80),
- mit einer auf oder an der Welle (80) drehstarr befestigten Bremsscheibe (10), wobei die Bremsscheibe (10) einen mindestens eine kegelstumpfmantelförmige Reibfläche (32) umfassenden Reibbereich (31) aufweist,
- und mit mindestens einem im Vorrichtungsgehäuse (40) angeordneten Bremskonus (65), an dem die Reibfläche (32) beim Bremsen oder Klemmen zur Anlage kommt,
- wobei der Bremskonus (65) - zur bremsenden oder klemmenden Belastung und zur lüftenden Entlastung der Bremsscheibe (10) - entweder durch zwei Stellglieder - jeweils eines pro be- und entlastender Betätigungsrichtung - oder durch ein Stellglied (60) für eine Betätigungsrichtung und ein Federsystem mit mindestens einem Federelement (71) für die andere Betätigungsrichtung axial bewegbar ist,
**dadurch gekennzeichnet,**
- **dass** im Vorrichtungsgehäuse (40) ein Klemmring (100) drehstarr angeordnet ist,
- **dass** der Klemmring (100) einen Anflanschbereich (111), einen Zwischenbereich (121) und einen Klemmbereich (131) aufweist,
- **dass** der Klemmbereich (131) gegenüber dem Anflanschbereich (111) über den zwischen diesen Bereichen (111, 131) gelegenen zumindest bereichsweise elastischen Zwischenbereich (121) in Axialrichtung (8) verschiebbar ist,
- **dass** der Klemmbereich (131) eine äußere und eine innere kegelstumpfmantelförmige Klemmfläche (132, 133) hat und
- **dass** die äußere Klemmfläche (132) gegenüber der Reibfläche (32) der Bremsscheibe (10) angeordnet ist, während die innere Klemmfläche (133) vor der Reibfläche (69) des Bremskonus (65) liegt.

2. Vorrichtung gemäß Anspruch 1, **dadurch gekennzeichnet, dass** der Zwischenbereich (121) des Klemmrings (100) aus elastischen Speichen (122) besteht.

3. Vorrichtung gemäß der Ansprüche 1 oder 2, **dadurch gekennzeichnet, dass** der Klemmbereich (131) des Klemmringes (100) aus einzelnen Segmenten (137) besteht, wobei die zwischen den Segmenten (137) liegenden Schlitze (138) die gleiche Teilung haben wie die Schlitze (123) zwischen den Speichen (122).

4. Vorrichtung gemäß Anspruch 1, **dadurch gekennzeichnet, dass** beide Klemmflächen (132, 133) des Klemmringes (100) den gleichen Kegelwinkel (34, 35) haben.

5. Vorrichtung gemäß Anspruch 4, **dadurch gekennzeichnet, dass** der Kegelwinkel (34, 35) zwischen 10 und 30 Winkelgraden liegt.

6. Vorrichtung gemäß Anspruch 1, **dadurch gekennzeichnet, dass** das Vorrichtungsgehäuse (40) einen Gehäusedeckel (51) hat und die zwischen diesen Teilen (40, 51) gelegene Montagefuge normal zur Mittellinie (9) der Welle (80) ausgerichtet ist.

7. Vorrichtung gemäß Anspruch 6, **dadurch gekennzeichnet, dass** der Anflanschbereich (111) zwischen den Teilen (40, 51) in einem Teilbereich der Montagefuge eingeklemmt ist.

## Claims

1. The braking and/or clamping device of a shaft (80) running on bearings inside an appliance housing (90) or the device housing (40),
- with a braking disc (10) that is mounted on or against said shaft (80) in such a way as to be stiff against torsion, whereby said braking disc (10) has a friction area (31) with at least one truncated convex friction surface (32),
- and at least one braking cone (65) located inside the appliance housing (40) on which said friction surface (32) is applied during braking or clamping,
- said friction cone (65) shifts axially, moved either by two actuators (60) - one per loading and unloading direction of actuation - or by one actuator (60) per loading and unloading direction of actuation and one spring system comprised of at least one spring element (71) for the other direction of actuation in order to load or unload said braking disc (10) by braking or clamping,
wherein
- one clamping ring (100) is mounted inside the device housing (40) in such a way as to be stiff against torsion,
- said clamping ring (100) shows a flanging area (111), a transition area (121) and a clamping area (131),
- said clamping area (131) shifts axially (8) against said flanging area (111) over said transition area (121) located between said first two areas (111, 131), said transition area (121) being resilient in at least some sections,
- said clamping area (131) has an internal and an external clamping surface (132, 133) that is truncated and convex
- and said external clamping surface (132) is located opposite said friction surface (32) of said braking disc (10), whereas said internal braking surface (133) faces said friction surface (69) on said braking cone (65).

2. The device of claim 1, wherein said transition area (121) of said clamping ring (100) is made of elastic spokes (122).

3. The device of claim 1 or 2, wherein said clamping area (131) of said clamping ring (100) is comprised of individual segments (137), whereby the slits (138) located between said segments (137) are as far apart as the slits (123) between said spokes (122).

4. The device of claim 1, wherein both clamping surfaces (132, 133) of said clamping ring (100) show the same angle of taper (34, 35).

5. The device of claim 4, wherein said angle of taper (34, 35) lies between 10 and 30 degrees.

6. The device of claim 1, wherein said device housing (40) shows a lid (51), and wherein the assembly joint located between said two parts (40, 51) is oriented vertically against the centre line (9) of said shaft (80).

7. The device of claim 6, wherein said clamping area (111) between said parts (40, 51) is clamped into a section of said assembly joint.

## Revendications

1. Dispositif de freinage et/ou de serrage d'un arbre (80) tournant sur paliers dans un carter d'appareil (90) ou dans le carter du dispositif (40),
- avec un disque de freinage (10) fixé sur ou contre ledit arbre (80) de manière à être rigide à la torsion, ledit disque de frein (10) présentant une zone de friction (31) qui a au moins une surface de friction (32) tronconique convexe
- et avec au moins un cône de freinage (65), placé dans le carter du dispositif (40), sur lequel vient se placer la surface de friction (32) lors du freinage ou du serrage,
- ledit cône de friction (65) étant déplaçable axialement, soit par l'entremise de deux actionneurs (60) (un par sens d'actionnement de charge et de décharge), soit par un actionneur (60) pour un sens d'actionnement et un système élastique comportant au moins un élément à ressort (71) pour l'autre sens d'actionnement afin d'assurer la charge de freinage ou de serrage et la décharge de desserrage dudit disque de frein (10),
**caractérisé en ce que**
- une bague de serrage (100) est placée dans le carter du dispositif (40) de manière à être rigide à la torsion,
- ladite bague de serrage (100) comporte une zone de bridage (111), une zone intermédiaire (121) et une zone de serrage (131),
- ladite zone de serrage (131) coulisse en direction axiale (8) par rapport à la zone de bridage (111) sur la zone intermédiaire (121) située entre des deux premières zones (111, 131), ladite zone intermédiaire (121) étant au moins partiellement élastique,
- ladite zone de serrage (131) possède une surface interne et une surface externe de serrage (132, 133) tronconiques convexes
- et que la surface externe de serrage (132) est placée en face de la surface de friction (32) du disque de freinage (10) tandis que la surface interne de freinage (133) se trouve devant la surface de friction (69) du cône de freinage (65).

2. Dispositif selon la revendication 1 **caractérisé en ce que** la zone intermédiaire (121) de la bague de serrage (100) est constituée de rayons élastiques (122).

3. Dispositif selon la revendication 1 ou 2 **caractérisé en ce que** la zone de serrage (121) de la bague de serrage (100) est composée de segments individuels (137), les fentes (138) placées entre les segments (137) présentant le même écartement que les fentes (123) entre les rayons (122).

4. Dispositif selon la revendication 1 **caractérisé en ce que** les deux surfaces de serrage (132, 133) de la bague de serrage (100) ont le même angle de cône (34, 35).

5. Dispositif selon la revendication 4 **caractérisé en ce que** l'angle de cône (34, 35) est compris entre 10 et 30 degrés.

6. Dispositif selon la revendication 1 **caractérisé en ce que** le carter du dispositif (40) comporte un couvercle (51) et que le joint de montage situé entre ces deux pièces (40, 51) est orienté à la verticale de la ligne médiane (9) de l'arbre (80).

7. Dispositif selon la revendication 6 **caractérisé en ce que** la zone de bridage (111) entre lesdites pièces (40, 51) est insérée dans une section du joint de montage.
